# EUROPEAN PATENT SPECIFICATION

(11) **EP 4 206 013 B1**
(45) Date of publication and mention of the grant of the patent: **26.11.2025**
(21) Application number: 22213430.6
(22) Date of filing: 14.12.2022
(51) Int. Cl.: B60K 1/00, B60K 1/04, B62J 43/16, B60L 50/60, B62J 9/12, B62J 43/20, B62K 5/01, B62K 5/08, B62K 25/28, B62K 5/00

(54) **VEHICLE**
FAHRZEUG
VÉHICULE

(30) Priority: 21.12.2021 JP 2021207425
(43) Date of publication of application: 05.07.2023
(73) Proprietor: Yamaha Hatsudoki Kabushiki Kaisha, Iwata-shi, Shizuoka 438-8501 (JP)
(72) Inventor: Takata, Kazunari, Iwata-shi, Shizuoka-ken, 438-8501 (JP); Osawa, Kensuke, Iwata-shi, Shizuoka-ken, 438-8501 (JP); Yasuda, Atsushi, Iwata-shi, Shizuoka-ken, 438-8501 (JP); Yoshida, Masahiro, Iwata-shi, Shizuoka-ken, 438-8501 (JP); Kamada, Kensuke, Iwata-shi, Shizuoka-ken, 438-8501 (JP); Higashiyama, Kenta, Iwata-shi, Shizuoka-ken, 438-8501 (JP); Umekita, Seiji, Iwata-shi, Shizuoka-ken, 438-8501 (JP); Miyake, Yasuo, Iwata-shi, Shizuoka-ken, 438-8501 (JP)
(74) Representative: Grünecker Patent- und Rechtsanwälte PartG mbB

(56) References cited:
- WO-A1-2023/044439
- JP-A- 2011 111 002
- US-A1- 2012 103 716
- US-A1- 2015 314 830
- US-B2- 8 973 691

## Description

The present invention relates to a vehicle according to the preamble of independent claim 1. Such kind of vehicle is known as electric ATVs (All Terrain Vehicles) and the like. As for example such vehicle can be taken from the prior art document JP 2011 111002 A.

JP 5509811 B discloses an electric rough terrain vehicle which is pertinent to conventional techniques of this kind. The vehicle includes a steering shaft which is supported pivotably at a front portion of a vehicle frame; a left-right pair of front wheels steered by means of the steering shaft; a left-right pair of rear wheels; a left-right pair of electric motors disposed between the left and right front wheels for driving the left and right front wheels respectively; a left-right pair of electric motors disposed between the left and right rear wheels for driving the left and right rear wheels respectively; and a battery disposed between the front and the rear wheels.

Also, JP 4214759 B discloses a four-wheeled electric rough terrain vehicle. The vehicle includes an electric motor disposed at a position near a rear portion of a body frame and protruding downward from the body frame; a plurality of batteries provided in line in a fore-aft direction at a generally intermediate portion of the body frame; and a controller disposed ahead of the batteries.

In JP 5509811 B, the electric motors for the rear wheels are placed between the left and the right rear wheels. In JP 4214759 B, the electric motor is placed so as to overlap the body frame in a side view. Therefore, it is not possible in the vehicles described in JP 5509811 B and JP 4214759 B to attach/detach the electric motor from a side of the vehicle. Also, it is assumed that the electric ATVs will travel on rough terrains such as rock sections, and therefore may be hit by flying stones during travel. Further, in both of JP 5509811 B and JP 4214759 B, heavy components, i.e., the electric motor and the battery, are located at a distance from each other. WO 2023/044439 A1 discloses an electric all-terrain vehicle.

It is the object of the present invention to provide a vehicle that can provide easy assembly and maintenance of drive motors, protection to the drive motors, and superiority in concentrating masses of the vehicle.

According to the present invention said object is solved by a vehicle having the features of independent claim 1. Preferred embodiments are laid down in the dependent claims.

According the invention, a vehicle includes a pair of upper frames spaced apart in a left-right direction of the vehicle, a pair of lower frames spaced apart in the left-right direction, a front frame connecting front portions of the pair of upper frames to the pair of lower frames, a rear frame connecting rear portions of the pair of upper frames to rear portions of the pair of lower frames, a pair of front wheels, a pair of rear wheels, a bar handle to steer the pair of front wheels, a drive motor to drive the pair of rear wheels, and a battery to supply electric power to the drive motor. In the vehicle, the drive motor and the battery are located in a region surrounded by the upper frames, the lower frames, the front frame, and the rear frame in a side view of the vehicle.

According to the invention, the drive motor and the battery are located in a region which is surrounded by the upper frames, the lower frames, the front frame, and the rear frame in the side view. The open space defined by the upper frames, the lower frames, the front frame, and the rear frame has a shape and a size to accommodate each of the drive motor and the battery to be installed therein from a side of the vehicle. Therefore, the drive motor is attachable/detachable between the side of the vehicle and the above-described region, i.e., the arrangement makes assembly and maintenance easy. Also, even when the vehicle travels on rough terrains such as rock sections and is hit by flying stones during travel, it is possible to protect the drive motor. Further, by locating the drive motor and the battery at the above-described region, the arrangement makes it possible to concentrate a heavy mass near the center of gravity of the vehicle, i.e., it is possible to centralize the mass of the vehicle. As described above, a preferred embodiment provides a vehicle which provides easy assembly and maintenance of the drive motor, protection to the drive motor, and superiority in the concentration of the mass of the vehicle.

Preferably, the drive motor and the battery do not protrude downward from the lower frames in the side view. In this case, it becomes even easier to assemble and maintain the drive motor, to protect the drive motor, and to centralize the mass of the vehicle.

Further preferably, the drive motor is behind the battery, the drive motor includes an output shaft, and the vehicle further includes a power transmission to transmit power from the output shaft to the rear wheels in order to drive the rear wheels. In this case, the battery is not between the drive motor and the rear wheels. This makes it easy to layout the power transmission required to connect the drive motor and the rear wheels, and also makes it possible to utilize the space ahead of the drive motor effectively for the battery.

Further, preferably, the power transmission includes a chain or a drive shaft. In this case, the arrangement makes it easy to configure the power transmission.

Preferably, the battery overlaps the pair of lower frames in a plan view of the vehicle. In this case, it is possible to further centralize the mass of the vehicle.

Further preferably, a widthwise length of the drive motor is shorter than a widthwise dimension of the rear frame in the plan view. In this case, the arrangement makes it easy for the rider to hold the vehicle body between his/her knees.

The vehicle according to the invention further includes a pivot shaft attached to the rear fame and extending in a widthwise direction of the vehicle, and widthwise lengths of the drive motor and the battery are shorter than an end-to-end length of the pivot shaft in the plan view. It is thus possible to reduce the dimension of the drive motor and the battery in the widthwise direction of the vehicle, thus making it possible to utilize the space on the side of the drive motor and the battery effectively.

Preferably, the vehicle further includes a pair of steps attached to the rear frame or the pair of lower frames, and widthwise lengths of the drive motor and the battery are shorter than a distance between the pair of steps in the plan view. In this case, when the rider put his/her feet onto the steps, the drive motor and the battery do not interfere with the rider, thus making it possible to enjoy comfortable ride.

Further preferably, the vehicle further includes a motor control unit above the battery to control the drive motor. In this case, the arrangement makes it easy to provide an electrical connection from the motor control unit to the battery.

Further, preferably, the vehicle further includes a motor control unit above the drive motor and behind the battery to control the drive motor. In this case, the arrangement makes it easy to provide an electrical connection from the motor control unit to the drive motor and the battery.

Preferably, the motor control unit is between the pair of lower frames in the plan view. In this case, it is possible to reduce the dimension of the motor control unit in the widthwise direction of the vehicle, thus making it possible to utilize the space on the side of the motor control unit effectively.

Further preferably, the vehicle further includes a console box above the battery. In this case, the arrangement makes it possible to utilize the space above the battery effectively as a storage space.

Further, the vehicle further includes a straddled seat at a position higher than the drive motor, and the bar handle is at a position higher than the straddled seat. Thus, the straddled seat and the bar handle are suitably applied to an ATV which is configured as above.

It should be noted here that the statement "the drive motor and the battery is located in a region surrounded by the upper frames, the lower frames, the front frame, and the rear frame in a side view" does not exclude cases where small portions of the drive motor and/or the battery, such as corners thereof, are located out of the region. That is, the region encompasses cases where the drive motor and the battery do not protrude substantially beyond the region.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a side view which shows a vehicle according to a preferred embodiment.
Fig. 2 is a plan view which shows the vehicle in Fig. 1.
Fig. 3 is a perspective view which shows the vehicle with exterior components removed.
Fig. 4 is a front view which shows the vehicle in Fig. 3.
Fig. 5 is a side view which shows the vehicle in Fig. 3 viewed from left.
Fig. 6 is a side view which shows the vehicle in Fig. 3 viewed from the right.
Fig. 7 is a plan view which shows the vehicle in Fig. 3.
Fig. 8 is a bottom view which shows the vehicle in Fig. 3.
Fig. 9 is an illustrative sectional view taken along line A-A in Fig. 7.
Fig. 10 is an enlarged plan view which shows a top portion and surroundings thereof of a drive motor.
Fig. 11 is an illustrative drawing which shows a case where a motor control unit is positioned between a pair of lower frames.
Fig. 12 is an illustrative drawing which shows a case where a motor control unit is provided above a drive motor and behind a battery.

### DETAILED DESCRIPTION OF THE PREFERRED EMBODIMENTS

Hereinafter, preferred embodiments will be described with reference to the drawings. It should be noted here that the terms front and rear, left and right, and up and down used in the preferred embodiments refer to front and rear, left and right, and up and down based on the state where a driver of the vehicle 10 is seated in a straddled seat 62 (which will be described below), facing a bar handle 50 (which will be described below). In the drawings, "Fr" indicates forward, "Rr" indicates rearward, "R" indicates rightward, "L" indicates leftward, "U" indicates upward, and "Lo" indicates downward. Accordingly, a fore-aft direction of the vehicle extends from rearward Rr to forward Fr and vice versa. A left-right direction of the vehicle extends from the rightward R to leftward L and vice versa. The left-right direction of the vehicle is synonymous to the widthwise direction of the vehicle. An upward-downward direction of the vehicle extends from upward U to downward and vice versa. The upward-downward direction of the vehicle is synonymous to the vertical direction of the vehicle.

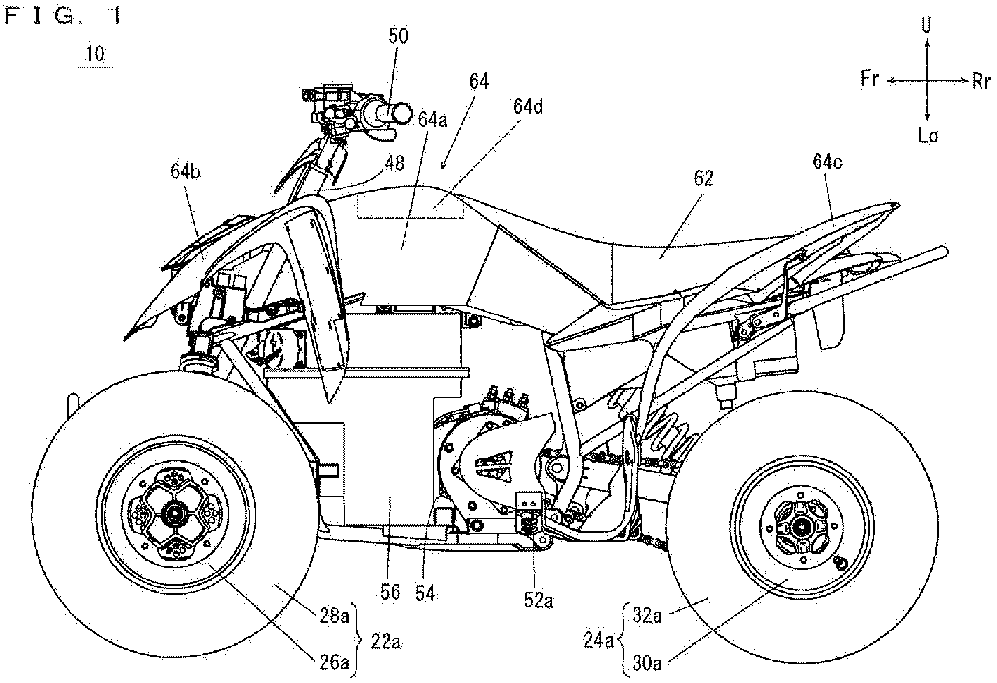

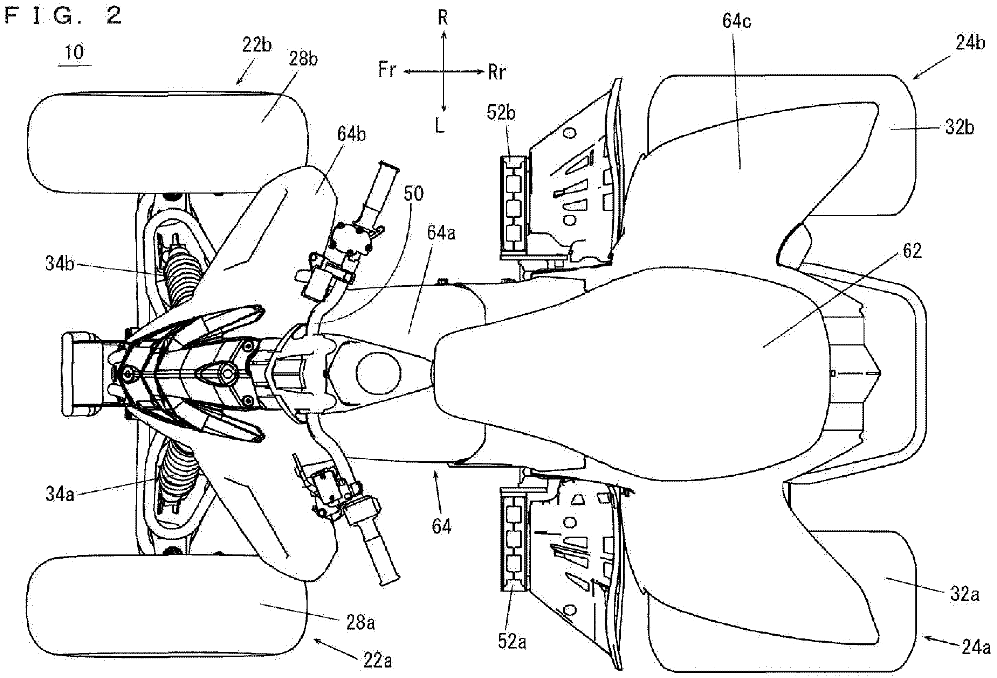

Referring to Fig. 1 and Fig. 2, a vehicle 10 according to a preferred embodiment is an electric ATV which carries one person.

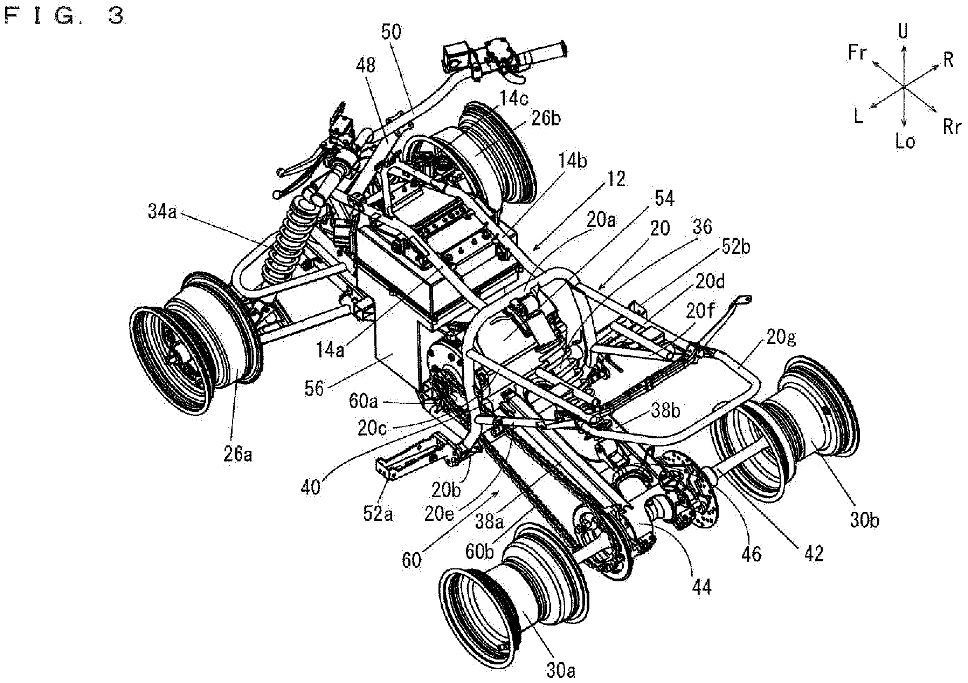

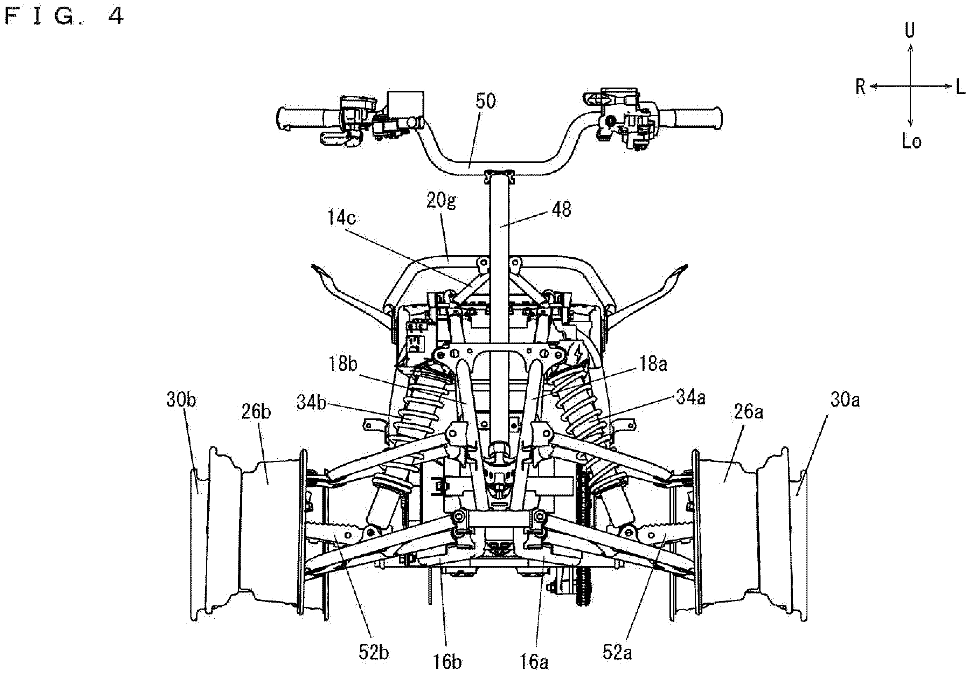

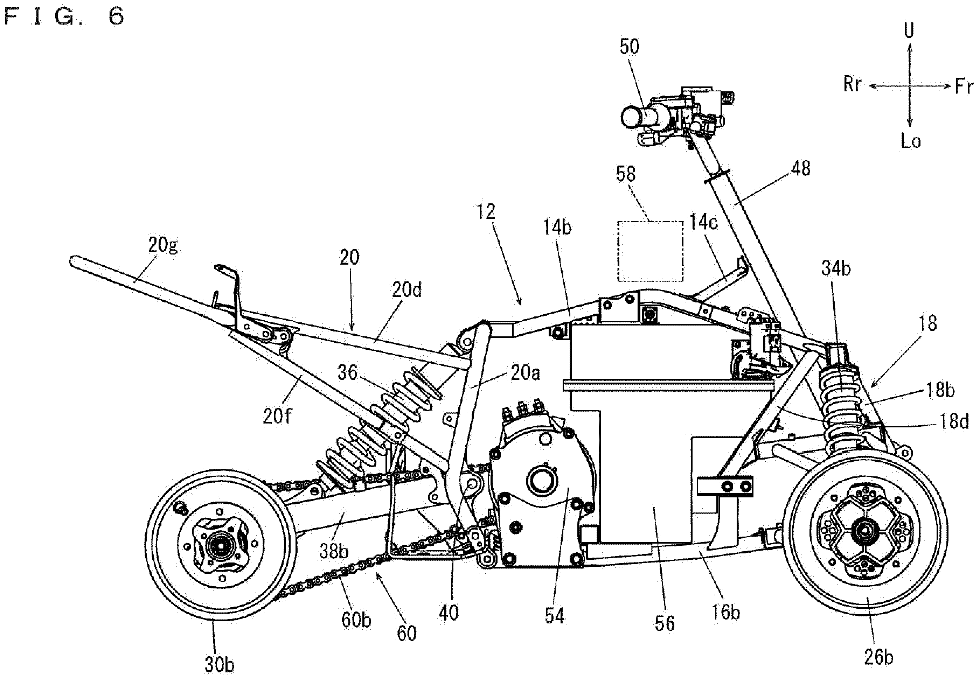

Referring to Fig. 3 through Fig. 8, the vehicle 10 includes a body frame 12. The body frame 12 includes a pair of upper frames 14a, 14b, a pair of lower frames 16a, 16b, a front frame 18, and a rear frame 20.

The pair of upper frames 14a, 14b extend in a fore-aft direction at a distance from each other in a left-right direction, with their intermediate portions having an inverted V-shape in a side view so as to slightly protrude upward. The pair of upper frames 14a, 14b have their generally intermediate portions connected by a support frame 14c, which supports a steering shaft 48 (which will be described below). The support frame 14c is generally V-shaped, and is provided on the pair of upper frames 14a, 14b to extend forward and diagonally upward in a side view.

The pair of lower frames 16a, 16b extend in a fore-aft direction below the pair of upper frames 14a, 14b, at a distance from each other in a left-right direction, such that the distance between the pair is greater between rearward portions than between forward portions.

The front frame 18 connects front portions of the pair of upper frames 14a, 14b to the pair of lower frames 16a, 16b. More specifically, the front frame 18 includes a pair of first frames 18a, 18b which connect the front portions of the pair of upper frames 14a, 14b with front portions of the pair of lower frames 16a, 16b; and a pair of second frames 18c, 18d which connect the front portions of the pair of upper frames 14a, 14b with generally intermediate portions of the pair of lower frames 16a, 16b. The pair of second frames 18c, 18d function as reinforcing members.

The rear frame 20 connects rear portions of the pair of upper frames 14a, 14b to rear portions of the pair of lower frames 16a, 16b. More specifically, the rear frame 20 includes a third frame 20a which is generally U-shaped in a rear view and generally V-shaped in a side view and connects the rear portions of the pair of upper frames 14a, 14b to the rear portions of the pair of lower frames 16a, 16b; a cross member 20b which connects two end portions of the third frame 20a; a pair of fourth frames 20c, 20d which extend rearward and slightly upward from upper portions of both sides of the third frame 20a; a pair of fifth frames 20e, 20f which extend rearward and upward from generally intermediate portions in both sides of the third frame 20a; and a sixth frame 20g which is generally U-shaped. The sixth frame 20g is located so that its first end portion is sandwiched by a rear end portion of the fourth frame 20c and a rear end portion of the fifth frame 20e, while its second end portion is sandwiched by a rear end portion of the fourth frame 20d and a rear end portion of the fifth frame 20f.

A pair of front wheels 22a, 22b are provided near a front portion of the body frame 12 and a pair of rear wheels 24a, 24b are provided near a rear portion of the body frame 12 (see Fig. 1 and Fig. 2). The front wheels 22a, 22b include wheels 26a, 26b and tires 28a, 28b assembled to the wheels 26a, 26b, respectively. Likewise, the rear wheels 24a, 24b include wheels 30a, 30b and tires 32a, 32b assembled to the wheels 30a, 30b, respectively.

The pair of front wheels 22a, 22b are connected to the body frame 12 via suspensions 34a, 34b, respectively.

The pair of rear wheels 24a, 24b are connected to the body frame 12 via a suspension 36, swing arms 38a, 38b and so on. In other words, two side portions of the third frame 20a of the rear frame 20 are connected with each other via a pivot shaft 40 which extends widthwise of the vehicle. The rear wheels 24a, 24b are connected with each other by an axle 42 which extends widthwise of the vehicle. At an intermediate portion of the axle 42, an arm support portion 44 is attached rotatably with respect to the axle 42. The pivot shaft 40 and the arm support portion 44 are connected with each other by the swing arms 38a, 38b extending in a fore-aft direction at a space in a left-right direction from each other. The swing arms 38a, 38b have their rear portions connected with each other by a connecting portion 46. The suspension 36 is provided at an intermediate portion in the vehicle's widthwise direction, and connects the third frame 20a with the connecting portion 46.

A steering shaft 48 extends through a space between the pair of upper frames 14a, 14b. The steering shaft 48 has its lower end portion connected with the pair of first frames 18a, 18b of the front frame 18. The steering shaft 48 is supported, at a position slightly higher than its intermediate portion, by the support frame 14c. A bar handle 50 to steer the pair of front wheels 22a, 22b is attached to an upper end portion of the steering shaft 48. The bar handle 50 is provided at a higher position than the straddled seat 62. When the bar handle 50 is operated, the steering shaft 48 is rotated to steer the front wheels 22a, 22b via an unillustrated pair of tie rods.

A pair of steps 52a, 52b are attached to two end portions of the third frame 20a of the rear frame 20 to extend outward of the vehicle.

The body frame 12 supports a drive motor 54 which drives the pair of rear wheels 24a, 24b, and a battery 56 which supplies electric power to the drive motor 54. The drive motor 54 and the battery 56 are provided on the pair of lower frames 16a, 16b. The drive motor 54 is behind the battery 56. Preferably, the battery 56 is an interchangeable rechargeable battery.

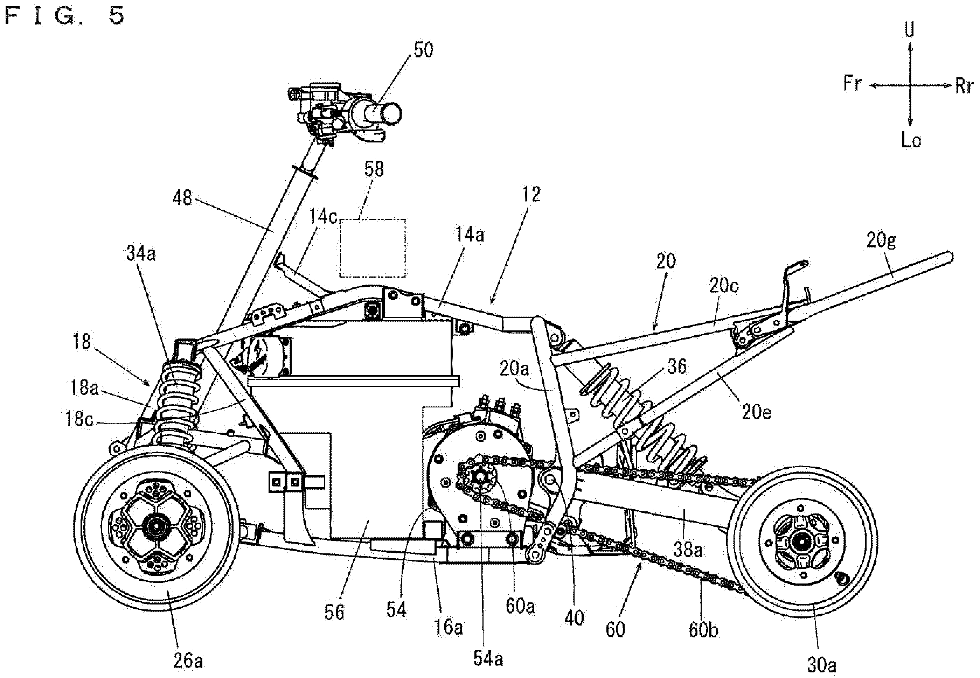

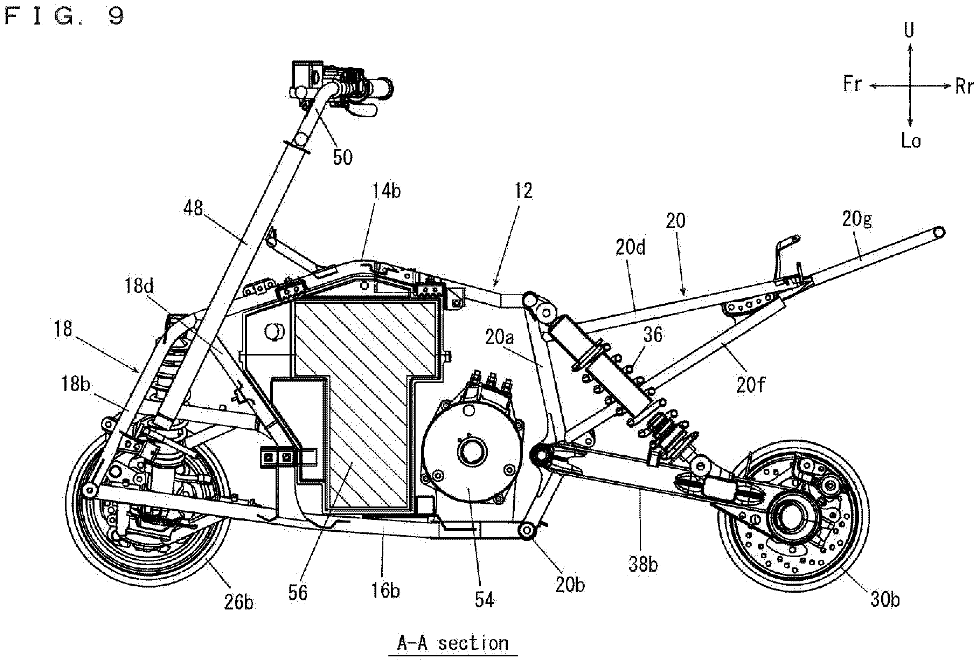

Referring to Fig. 5, Fig. 6, and Fig. 9, in a side view, the drive motor 54 and the battery 56 are located in a region which is surrounded by the upper frames 14a, 14b, the lower frames 16a, 16b, the pair of second frames 18c, 18d of the front frame 18, and the third frame 20a of the rear frame 20. The open space defined by the upper frames 14a, 14b, the lower frames 16a, 16b, the front frame 18, and the rear frame 20 has a shape and a size to accommodate each of the drive motor 54 and the battery 56 to be installed therein from a side. In the present preferred embodiment, the drive motor 54 and the battery 56 are located inside the region which is surrounded by the upper frames 14a, 14b, the lower frames 16a, 16b, the second frames 18c, 18d of the front frame 18, and the third frame 20a of the rear frame 20, and do not overlap these frames in a side view. In a side view, the drive motor 54 and the battery 56 do not protrude downward from the pair of lower frames 16a, 16b.

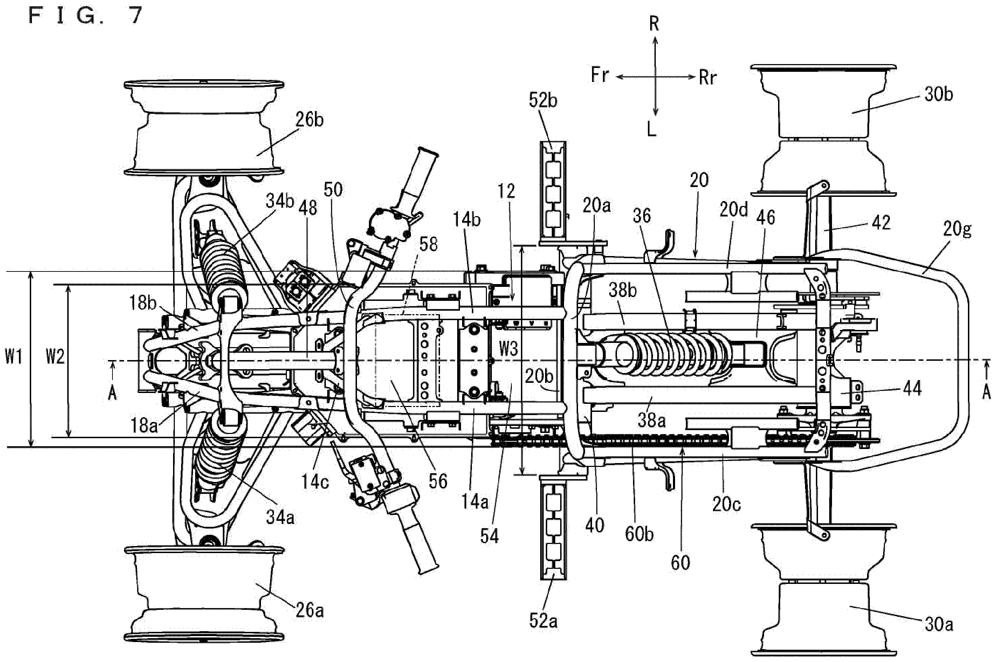

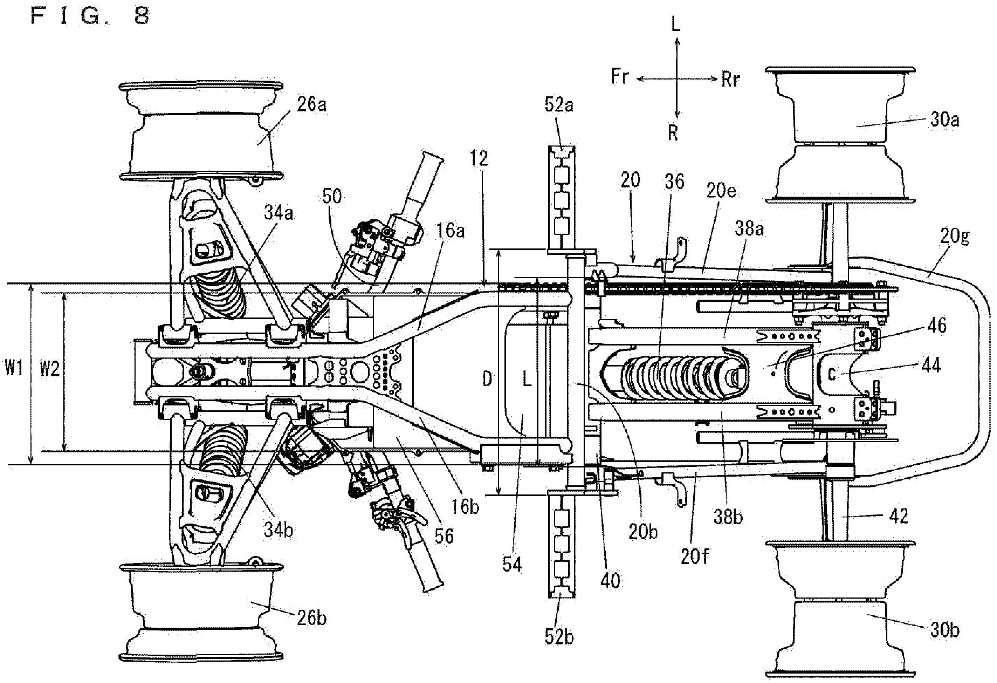

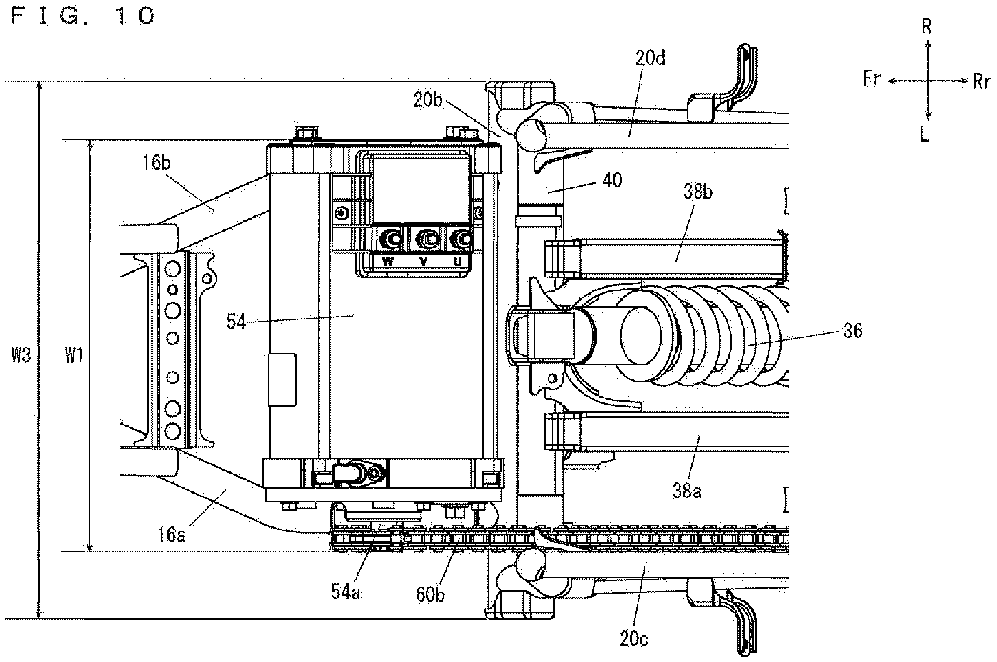

Referring to Fig. 7 and Fig. 8, the battery 56 overlaps the pair of lower frames 16a, 16b in a plan view. Referring further to Fig. 10, the drive motor 54 and the battery 56 have their respective widthwise lengths W1, W2 shorter than a widthwise dimension W3 of the rear frame 20 in a plan view. In a plan view, the drive motor 54 and the battery 56 have their respective widthwise lengths W1, W2 shorter than an end-to-end length L of the pivot shaft 40. In a plan view, the drive motor 54 and the battery 56 have their respective widthwise lengths W1, W2 shorter than a distance D between the steps 52a, 52b.

Referring to Fig. 5 through Fig. 7, a motor control unit (MCU) 58 is provided above the battery 56 in order to control the drive motor 54. The motor control unit 58 is supported by the pair of upper frames 14a, 14b via an unillustrated bracket.

The drive motor 54 includes an output shaft 54a.

Power from the output shaft 54a is transmitted to the pair of rear wheels 24a, 24b via a power transmission (member) 60 to drive the pair of rear wheels 24a, 24b. The power transmission member 60 includes a sprocket 60a attached to the output shaft 54a, a sprocket (not illustrated) attached to the axle 42, and a chain 60b connecting the sprocket 60a and the axle-side sprocket with each other. Therefore, the power from the output shaft 54a is transmitted through the sprocket 60a, the chain 60b, and the axle-side sprocket, to the axle 42, and then to the pair of rear wheels 24a, 24b.

Referring to Fig. 1 and Fig. 2, the straddled seat 62 and an exterior portion 64 are mounted to the body frame 12.

The straddled seat 62 is at a position higher than the drive motor 54, and is supported by the pair of fourth frames 20c, 20d of the rear frame 20.

The exterior portion 64 includes a top cover 64a located ahead of the straddled seat 62, a front fender 64b located ahead of the top cover 64a, and a rear fender 64c located behind the top cover 64a to surround the straddled seat 62. The top cover 64a includes a console box 64d attached thereto. The console box 64d is above the battery 56.

According to the vehicle 10 described thus far, the drive motor 54 and the battery 56 are located in a region which is surrounded by the upper frames 14a, 14b, the lower frames 16a, 16b, the front frame 18, and the rear frame 20 in a side view. The open space defined by the upper frames 14a, 14b, the lower frames 16a, 16b, the front frame 18, and the rear frame 20 has a shape and a size to accommodate each of the drive motor 54 and the battery 56 to be installed therein from a side. Therefore, the drive motor 54 is attachable/detachable between the side of the vehicle and the above-described region, i.e., the arrangement makes assembly and maintenance easy. Also, even when the vehicle 10 travels on rough terrains such as rock sections and hit by flying stones during travel, it is possible to protect the drive motor 54. Further, by locating the drive motor 54 and the battery 56 at the above-described region, the arrangement makes it possible to concentrate a heavy mass near the center of gravity of the vehicle 10, i.e., thus making it possible to centralize the mass of the vehicle 10.

Since the drive motor 54 and the battery 56 do not protrude downward from the lower frames 16a, 16b in a side view, it is even easier to assemble and maintain the drive motor 54, to protect the drive motor 54, and to centralize the mass of the vehicle 10.

The battery 56 is not located between the drive motor 54 and the rear wheels 24a, 24b. This makes it easy to layout the power transmission member 60 required to connect the drive motor 54 and the rear wheels 24a, 24b, and also makes it possible to utilize the space ahead of the drive motor 54 effectively for the battery. The arrangement is effective especially when the power transmission member 60 includes the chain 60b.

Since the power transmission member 60 includes the chain 60b, the arrangement makes it easy to configure the power transmission member 60.

The battery 56 overlaps the pair of lower frames 16a, 16b in a plan view. This makes it possible to further centralize the mass of the vehicle 10.

The widthwise length W1 of the drive motor 54 is shorter than the widthwise dimension W3 of the rear frame 20 in a plan view. This makes it easy for the rider to hold the vehicle body between his/her knees. Also, the arrangement makes it possible to layout the power transmission member 60 including the chain 60b inside the rear frame 20.

In a plan view, the widthwise lengths W1, W2 of the drive motor 54 and battery 56 respectively are shorter than the end-to-end length L of the pivot shaft 40. This makes it possible to reduce dimensions of the drive motor 54 and the battery 56 in the widthwise direction of the vehicle, making it possible to effectively use the space on the side of the drive motor 54 and the battery 56.

In a plan view, the drive motor 54 and the battery 56 have their respective widthwise lengths W1, W2 shorter than the distance D between the steps 52a, 52b. Therefore, when the rider put his/her feet onto the steps, 52a, 52b, the drive motor 54 and battery 56 do not interfere with the rider, thus making it possible to enjoy a comfortable ride.

The motor control unit 58 is above the battery 56. This makes is easy to provide wiring from the motor control unit 58 to the battery 56.

The console box 64d is above the battery 56. This makes it possible to utilize the space above the battery 56 effectively as a storage space.

A preferred embodiment is suitably applied to an ATV.

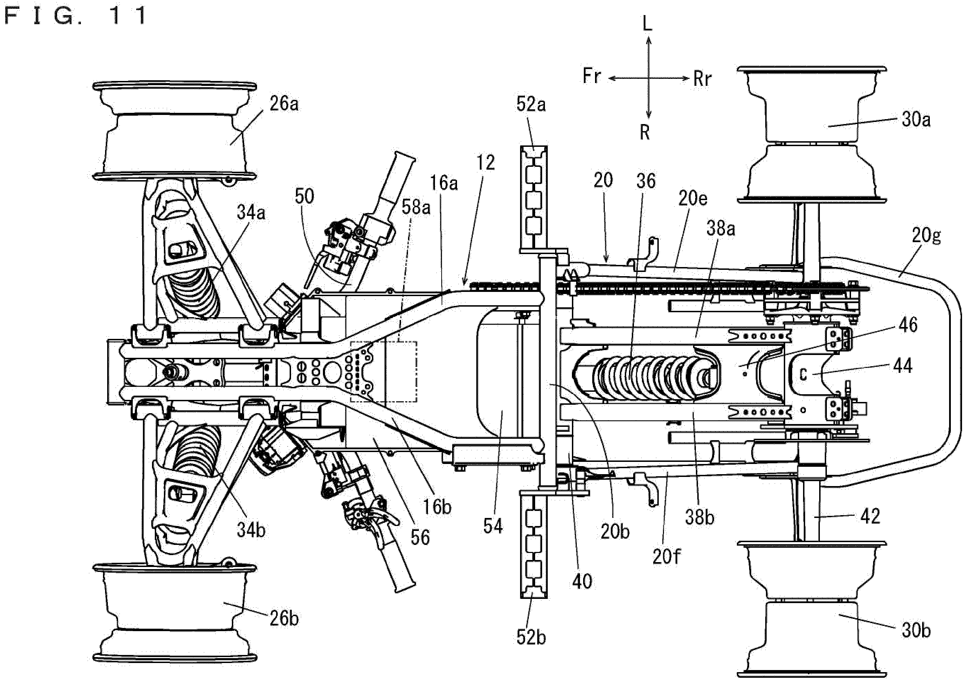

It should be noted here that the motor control unit 58 shown in Fig. 5 through Fig. 7 may be replaced with a motor control unit 58a in Fig. 11. The motor control unit 58a has a smaller dimension in the widthwise direction of the vehicle than the dimension of the motor control unit 58 in the widthwise direction of the vehicle. In a plan view, the motor control unit 58a is located between the pair of lower frames 16a, 16b. In this case, it is possible to reduce the dimension of the motor control unit 58a in the widthwise direction of the vehicle, thus making it possible to utilize the space on the side of the motor control unit 58a effectively.

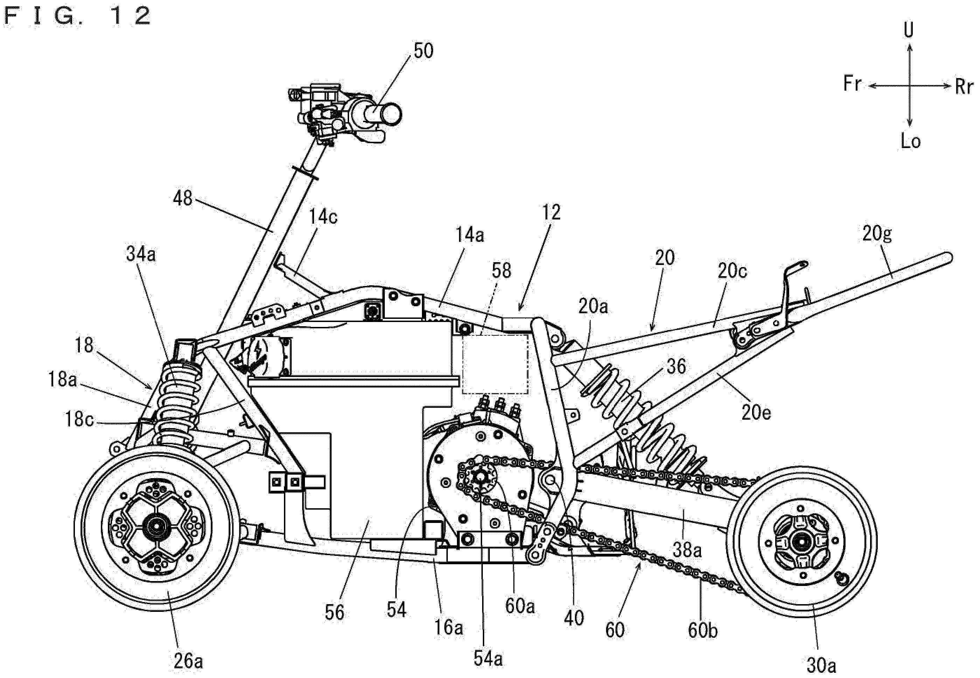

In the preferred embodiment shown in Fig. 5 through Fig. 7, description was made for a case where the motor control unit 58 is provided above the battery 56. Alternatively, as shown in Fig. 12, the motor control unit 58 may be provided above the drive motor 54 and behind the battery 56. In this case, the arrangement makes it easy to provide an electrical connection from the motor control unit 58 to the drive motor 54 and the battery 56. Also, it is possible, again in this case, to place the motor control unit 58 between the pair of lower frames 16a, 16b in a plan view.

The power transmission member may include a drive shaft. In this case, too, the arrangement makes it easy to configure the power transmission member.

The pair of steps 52a, 52b may be attached to the pair of lower frames 16a, 16b.

There may be an air introduction member to introduce wind to the drive motor 54 and the battery 56 on the top cover 64a or on the front fender 64b, for example. Also, the battery 56 may be provided with an air introduction member.

## Claims

1. A vehicle (10) comprising:
a pair of upper frames (14a, 14b) spaced apart in a left-right direction of the vehicle;
a pair of lower frames (16a, 16b) spaced apart in the left-right direction of the vehicle;
a front frame (18) connecting front portions of the pair of upper frames (14a, 14b) to the pair of lower frames (16a, 16b);
a rear frame (20) connecting rear portions of the pair of upper frames (14a, 14b) to rear portions of the pair of lower frames (16a, 16b);
a pair of front wheels (22a, 22b);
a pair of rear wheels (24a, 24b);
a bar handle (50) configured to steer the pair of front wheels (22a, 22b);
a drive unit (54) configured to drive the pair of rear wheels (24a, 24b) and provided with a drive motor (54);
a straddled seat (62) at a position higher than the drive motor (54) with regard to the upward-downward direction of the vehicle; wherein
the bar handle (50) is at a position higher than the straddled seat (62) with regard to the upward-downward direction of the vehicle; and
a battery (56) configured to supply electric power to the drive unit (54); and
the battery (56) is a single battery located in a region surrounded by the upper frames (14a, 14b), the lower frames (16a, 16b), the front frame (18), and the rear frame (20) in a side view of the vehicle,
wherein the drive motor (54) and the battery (56) are located in the region surrounded by the upper frames (14a, 14b), the lower frames (16a, 16b), the front frame (18), and the rear frame (20) in a side view of the vehicle,
**characterized in that**
a pivot shaft (40) attached to the rear frame (20) and extending in widthwise direction of the vehicle, and wherein widthwise lengths of the drive motor (54) and the battery (56) with regard to a widthwise direction of the vehicle are shorter than an end-to-end length of the pivot shaft (40) in a plan view of the vehicle.

2. The vehicle (10) according to claim 1, **characterized in that** the drive motor (54) and the battery (56) do not protrude downward from the lower frames (16a, 16b) with regard to an upward-downward direction of the vehicle in a side view of the vehicle.

3. The vehicle (10) according to claim 1 or 2, **characterized in that** the drive motor (54) is behind the battery (56) with regard to a fore-aft direction of the vehicle;
the drive motor (54) includes an output shaft (54a); and
the vehicle (10) further comprises a power transmission (60) configured to transmit power from the output shaft (54a) to the rear wheels (24a, 24b) to drive the rear wheels (24a, 24b).

4. The vehicle (10) according to claim 3, **characterized in that** the power transmission (60) includes a chain (60b) or a drive shaft.

5. The vehicle (10) according to any of the claims 1 to 4, **characterized in that** the battery (56) overlaps the pair of lower frames (16a, 16b) in a plan view of the vehicle.

6. The vehicle (10) according to any of the claims 1 to 5, **characterized in that** a widthwise length of the drive motor (54) with regard to a widthwise direction of the vehicle is shorter than a widthwise dimension of the rear frame (20) with regard to a widthwise direction of the vehicle in a plan view of the vehicle.

7. The vehicle (10) according to any of the claims 1 to 6, **characterized by:**
a pair of steps (52a, 52b) attached to the rear frame (20) or the pair of lower frames (16a, 16b); wherein
widthwise lengths of the drive motor (54) and the battery (56) with regard to a widthwise direction of the vehicle are shorter than a distance between the pair of steps (52a, 52b) in a plan view of the vehicle.

8. The vehicle (10) according to any of the claims 1 to 7, **characterized by** a motor control unit (58) to control the drive motor (54) and arranged above the battery (56) with regard to an upward-downward direction of the vehicle.

9. The vehicle (10) according to claim 8, **characterized in that** the motor control unit (58) is arranged above the drive motor (54) and behind the battery (56) with regard to the fore-aft direction of the vehicle.

10. The vehicle (10) according to claim 8 or 9, **characterized in that** the motor control unit (58) is between the pair of lower frames (16a, 16b) in a plan view of the vehicle.

11. The vehicle (10) according to any of the claims 1 to 10, **characterized by** a console box (64d) above the battery (56) with regard to the upward-downward direction of the vehicle.

## Patentansprüche

1. Ein Fahrzeug (10), das umfasst:
ein Paar oberer Rahmen (14a, 14b), die in der Links-Rechts-Richtung des Fahrzeugs voneinander beabstandet sind;
ein Paar unterer Rahmen (16a, 16b), die in der Links-Rechts-Richtung des Fahrzeugs voneinander beabstandet sind;
einen vorderen Rahmen (18), der vordere Abschnitte des Paares oberer Rahmen (14a, 14b) mit dem Paar unterer Rahmen (16a, 16b) verbindet;
ein hinterer Rahmen (20), der hintere Abschnitte des Paares oberer Rahmen (14a, 14b) mit hinteren Abschnitten des Paares unterer Rahmen (16a, 16b) verbindet;
ein Paar Vorderräder (22a, 22b);
ein Paar Hinterräder (24a, 24b);
einen Lenker (50), der zum Lenken des Paares von Vorderrädern (22a, 22b) konfiguriert ist;
eine Antriebseinheit (54), die zum Antreiben des Paares von Hinterrädern (24a, 24b) konfiguriert ist und mit einem Antriebsmotor (54) versehen ist;
einen Spreizsitz (62) an einer Position, die in Bezug auf die Auf-Ab-Richtung des Fahrzeugs höher liegt als der Antriebsmotor (54); wobei
eine Batterie (56), die so konfiguriert ist, dass sie die Antriebseinheit (54) mit Strom versorgt; und
die Batterie (56) eine einzelne Batterie ist, die sich in einem Bereich befindet, der von den oberen Rahmen (14a, 14b), den unteren Rahmen (16a, 16b), dem vorderen Rahmen (18) und dem hinteren Rahmen (20) in einer Seitenansicht des Fahrzeugs umgeben ist; wobei
der Antriebsmotor (54) und die Batterie (56) in dem Bereich angeordnet sind, der von den oberen Rahmen (14a, 14b), den unteren Rahmen (16a, 16b), dem vorderen Rahmen (18) und dem hinteren Rahmen (20) in einer Seitenansicht des Fahrzeugs umgeben ist, **dadurch gekennzeichnet, dass**
eine Schwenkwelle (40) am hinteren Rahmen (20) befestigt ist und sich in Breitenrichtung des Fahrzeugs erstreckt, wobei die Breitenlängen des Antriebsmotors (54) und der Batterie (56) in Bezug auf die Breitenrichtung des Fahrzeugs kürzer sind als die End-zu-End-Länge der Schwenkwelle (40) in einer Draufsicht auf das Fahrzeug.

2. Das Fahrzeug (10) gemäß Anspruch 1, **dadurch gekennzeichnet, dass** der Antriebsmotor (54) und die Batterie (56) in einer Seitenansicht des Fahrzeugs in Bezug auf eine Aufwärts-Abwärts-Richtung des Fahrzeugs nicht nach unten aus den unteren Rahmen (16a, 16b) herausragen.

3. Das Fahrzeug (10) gemäß Anspruch 1 oder 2, **dadurch gekennzeichnet, dass** sich der Antriebsmotor (54) in Bezug auf die Längsrichtung des Fahrzeugs hinter der Batterie (56) befindet;
der Antriebsmotor (54) eine Ausgangswelle (54a) enthält; und
das Fahrzeug (10) ferner eine Kraftübertragungseinrichtung (60) umfasst, die so konfiguriert ist, dass sie Kraft von der Ausgangswelle (54a) auf die Hinterräder (24a, 24b) überträgt, um die Hinterräder (24a, 24b) anzutreiben.

4. Das Fahrzeug (10) gemäß Anspruch 3, **dadurch gekennzeichnet, dass** die Kraftübertragungseinrichtung (60) eine Kette (60b) oder eine Antriebswelle enthält.

5. Das Fahrzeug (10) gemäß irgendeinem der Ansprüche 1 bis 4, **dadurch gekennzeichnet, dass** die Batterie (56) in einer Draufsicht auf das Fahrzeug das Paar unterer Rahmen (16a, 16b) überlappt.

6. Das Fahrzeug (10) gemäß irgendeinem der Ansprüche 1 bis 5, **dadurch gekennzeichnet, dass** eine Breitenlänge des Antriebsmotors (54) in Bezug auf eine Breitenrichtung des Fahrzeugs kürzer ist als eine Breitenabmessung des hinteren Rahmens (20) in Bezug auf eine Breitenrichtung des Fahrzeugs in einer Draufsicht auf das Fahrzeug.

7. Das Fahrzeug (10) gemäß irgendeinem der Ansprüche 1 bis 6, **gekennzeichnet durch:**
ein Paar Trittstufen (52a, 52b), die an dem hinteren Rahmen (20) oder dem Paar unterer Rahmen (16a, 16b) angebracht sind; wobei
die Breitenlängen des Antriebsmotors (54) und der Batterie (56) in Bezug auf die Breitenrichtung des Fahrzeugs kürzer sind als der Abstand zwischen dem Paar von Trittstufen (52a, 52b) in einer Draufsicht auf das Fahrzeug.

8. Das Fahrzeug (10) gemäß irgendeinem der Ansprüche 1 bis 7, **gekennzeichnet durch** eine Motorsteuereinheit (58) zum Steuern des Antriebsmotors (54), die in Bezug auf eine Aufwärts-Abwärts-Richtung des Fahrzeugs über der Batterie (56) angeordnet ist.

9. Das Fahrzeug (10) gemäß Anspruch 8, **dadurch gekennzeichnet, dass** die Motorsteuereinheit (58) in Bezug auf die Längsrichtung des Fahrzeugs oberhalb des Antriebsmotors (54) und hinter der Batterie (56) angeordnet ist.

10. Das Fahrzeug (10) gemäß Anspruch 8 oder 9, **dadurch gekennzeichnet, dass** sich die Motorsteuereinheit (58) in einer Draufsicht auf das Fahrzeug zwischen dem Paar unterer Rahmen (16a, 16b) befindet.

11. Das Fahrzeug (10) gemäß irgendeinem der Ansprüche 1 bis 10, **gekennzeichnet durch** eine Konsolenbox (64d) oberhalb der Batterie (56) in Bezug auf die Aufwärts-Abwärts-Richtung des Fahrzeugs.

## Revendications

1. Véhicule (10) comprenant :
une paire de cadres supérieurs (14a, 14b) espacés dans une direction gauche-droite du véhicule ;
une paire de cadres inférieurs (16a, 16b) espacés dans la direction gauche-droite du véhicule ;
un cadre avant (18) reliant des portions avant de la paire de cadres supérieurs (14a, 14b) à la paire de cadres inférieurs (16a, 16b) ;
un cadre arrière (20) reliant des portions arrière de la paire de cadres supérieurs (14a, 14b) à des portions arrière de la paire de cadres inférieurs (16a, 16b) ;
une paire de roues avant (22a, 22b) ;
une paire de roues arrière (24a, 24b) ;
un guidon (50) configuré pour diriger la paire de roues avant (22a, 22b) ;
une unité d'entraînement (54) configurée pour entraîner la paire de roues arrière (24a, 24b) et munie d'un moteur d'entraînement (54) ;
une selle (62) à une position plus élevée que le moteur d'entraînement (54), par rapport à la direction haut-bas du véhicule ; dans lequel
le guidon (50) est à une position plus élevée que la selle (62), par rapport à la direction haut-bas du véhicule ; et
une batterie (56) configurée pour alimenter en énergie électrique l'unité d'entraînement (54) ; et
la batterie (56) est une batterie unique située dans une zone délimitée par les cadres supérieurs (14a, 14b), les cadres inférieurs (16a, 16b), le cadre avant (18) et le cadre arrière (20) dans une vue latérale du véhicule, dans lequel
le moteur d'entraînement (54) et la batterie (56) sont situés dans la région délimitée par les cadres supérieurs (14a, 14b), les cadres inférieurs (16a, 16b), le cadre avant (18) et le cadre arrière (20) dans une vue latérale du véhicule,
**caractérisé en ce que**
un arbre de pivotement (40) est fixé au cadre arrière (20) et s'étend dans la direction transversale du véhicule, et dans lequel les longueurs transversales du moteur d'entrainement (54) et de la batterie (56) par rapport à la direction transversale du véhicule sont inférieures à la longueur d'une extrémité à l'autre de l'arbre de pivotement (40) dans une vue en plan du véhicule.

2. Véhicule (10) selon la revendication 1, **caractérisé en ce que** le moteur d'entraînement (54) et la batterie (56) ne dépassent pas vers le bas depuis les cadres inférieurs (16a, 16b), par rapport à la direction haut-bas du véhicule dans une vue latérale du véhicule.

3. Véhicule (10) selon la revendication 1 ou 2, **caractérisé en ce que** le moteur d'entraînement (54) est situé derrière la batterie (56) par rapport à la direction avant-arrière du véhicule ;
le moteur d'entraînement (54) comprend un arbre de sortie (54a) ; et
le véhicule (10) comprend en outre une transmission de puissance (60) configurée pour transmettre la puissance de l'arbre de sortie (54a) aux roues arrière (24a, 24b), afin d'entraîner les roues arrière (24a, 24b).

4. Véhicule (10) selon la revendication 3, **caractérisé en ce que** la transmission de puissance (60) comprend une chaîne (60b) ou un arbre d'entraînement.

5. Véhicule (10) selon l'une des revendications 1 à 4, **caractérisé en ce que** la batterie (56) chevauche la paire de cadres inférieurs (16a, 16b) dans une vue en plan du véhicule.

6. Véhicule (10) selon l'une des revendications 1 à 5, **caractérisé en ce que** la longueur transversale du moteur d'entraînement (54) par rapport à la direction transversale du véhicule est inférieure à la dimension transversale du cadre arrière (20) par rapport à la direction transversale du véhicule dans une vue en plan du véhicule.

7. Véhicule (10) selon l'une des revendications 1 à 6, **caractérisé par :**
une paire de repose-pieds (52a, 52b) fixés au cadre arrière (20) ou à la paire de cadres inférieurs (16a, 16b) ; dans lequel
les longueurs transversales du moteur d'entraînement (54) et de la batterie (56) par rapport à la direction transversale du véhicule sont inférieures à la distance entre la paire de repose-pieds (52a, 52b) dans une vue en plan du véhicule.

8. Véhicule (10) selon l'une des revendications 1 à 7, **caractérisé par** une unité de commande de moteur (58) pour commander le moteur d'entraînement (54) et agencée au-dessus de la batterie (56) par rapport à une direction haut-bas du véhicule.

9. Véhicule (10) selon la revendication 8, **caractérisé en ce que** l'unité de commande de moteur (58) est agencée au-dessus du moteur d'entraînement (54) et derrière la batterie (56) par rapport à la direction avant-arrière du véhicule.

10. Véhicule (10) selon la revendication 8 ou 9, **caractérisé en ce que** l'unité de commande de moteur (58) se situe entre la paire de cadres inférieurs (16a, 16b) dans une vue en plan du véhicule.

11. Véhicule (10) selon l'une des revendications 1 à 10, **caractérisé par** une boîte de console (64d) au-dessus de la batterie (56) par rapport à la direction haut-bas du véhicule.
